# EUROPÄISCHE PATENTSCHRIFT

(11) **EP 2 371 782 B1**
(45) Veröffentlichungstag und Bekanntmachung des Hinweises auf die Patenterteilung: **23.06.2021**
(21) Anmeldenummer: 11154060.5
(22) Anmeldetag: 10.02.2011
(51) Int. Cl.: C04B 26/02, C04B 26/06, C04B 26/16, C04B 28/02, C04B 40/06

(54) **Patrone, Kartusche oder Folienbeutel, enthaltend eine chemische Zweikomponenten-Mörtelmasse mit verbesserter Haftung an der Oberfläche von halbgereinigten und/oder feuchten Bohrlöchern in mineralischem Untergrund und ihre Verwendung**
Cartridge or foil pouch containing a chemical two-component mortar composition with improved adhesion to the surface of semi-purified and/or wet bore holes in mineral base and use of same
Cartouche ou sachet en feuille contenant une masse de mortier chimique à deux composants dotée d'une adhérence améliorée aux surfaces de trous de forage nettoyées à moitié et/ou humides dans des sous-sols minéraux et son utilisation

(30) Priorität: 29.03.2010 DE 102010013196
(43) Veröffentlichungstag der Anmeldung: 05.10.2011
(73) Patentinhaber: HILTI Aktiengesellschaft, 9494 Schaan (LI)
(72) Erfinder: Kumru, Memet-Emin, 86199, Augsburg (DE); Maiershofer, Sandra, 86862, Lamerdingen (DE); Thiemann, Frank, 86899, Landsberg/Lech (DE)
(74) Vertreter: Hilti Aktiengesellschaft Corporate Intellectual Property

(56) Entgegenhaltungen:
- EP-A1- 1 118 628
- EP-A1- 1 217 017
- EP-A2- 0 761 792
- EP-A2- 1 619 174
- WO-A1-93/01246
- WO-A2-2008/058588
- JP-A- S62 288 675

## Beschreibung

Gegenstand der Erfindung ist eine Patrone, Kartusche oder ein Folienbeutel, enthaltend eine chemische Zweikomponenten-Mörtelmasse mit einer Harzkomponente (A), die als härtbaren Bestandteil mindestens eine radikalisch härtbare, ethylenisch ungesättigte Verbindung (a) enthält, und eine davon reaktionsinhibierend getrennt angeordnete Härterkomponente (B), die ein Härtungsmittel für das Harz der Harzkomponente (A) enthält, mit verbesserter Haftung an der Oberfläche von halbgereinigten und/oder feuchten Bohrlöchern in mineralischem Untergrund; sowie die Verwendung der Zweikomponenten-Mörtelmasse zur chemischen Befestigung von Ankergewindestangen, Bewehrungseisen, Gewindehülsen und Schrauben in Bohrlöchern in mineralischem Untergrund.

Zur Befestigung von Bauteilen, wie Ankergewindestangen, Bewehrungseisen, Gewindehülsen und Schrauben in Bohrlöchern, die in mineralischem Untergrund, wie Beton, Naturstein, Putz etc. vorliegen, werden, namentlich dann, wenn hohe Lastwerte der Fixierung erreicht werden sollen, chemische Zweikomponenten-Mörtelmassen der eingangs beschriebenen Art eingesetzt. Bei der Anwendung werden zunächst die Bohrlöcher zur Aufnahme der zu befestigenden Bauteile mit den entsprechenden Abmessungen in den mineralischen Untergrund gebohrt. Anschließend müssen die Bohrlöcher von dem Bohrstaub befreit werden, wonach die chemische Zweikomponenten-Mörtelmasse nach Vermischen der Harzkomponente mit der Härterkomponente in das Bohrloch eingebracht und dann das zu befestigende Bauteil in das mit der Mörtelmasse angefüllte Bohrloch eingeführt und justiert wird. Nach dem Aushärten durch Reaktion der Harzkomponente mit der Härterkomponente wird ein fester Halt des Bauteils erreicht.

Die Lastwerte der in dieser Weise befestigten Bauteile und damit ihr Tragverhalten hängt von mehreren Einflussgrößen ab, die in der Literatur in zwei Klassen als interne und externe Größen eingeteilt werden. Zu den externen Einflussgrößen gehören unter anderem die Art der Bohrlochreinigung, die Güte des mineralischen Untergrunds, beispielsweise des Betons, seine Feuchtigkeit und seine Temperatur sowie die Art der Bohrlochherstellung.

Zu den internen Einflussgrößen gehören die chemische Zusammensetzung der Mörtelmasse, ihr Herstellungsprozess und ihre Verpackung, die in der Regel zwei Komponenten umfasst, die in getrennten Behältern, wie Patronen, Glaspatronen, Kartuschen oder Folienbeuteln oder dergleichen enthalten sind oder die mit Hilfe von Injektionssystemen oder Vergusssystemen angewandt werden.

Aus der deutschen Offenlegungsschrift DE 10 2006 054 471 A1 ist ein Mehrkomponenten-Kunstharzsystem insbesondere zur Befestigung von Befestigungsmitteln, vor allem Verankerungsmitteln, in Ausnehmungen, vorzugsweise Bohrlöchern, bekannt. Dieses Mehrkomponenten-Kunstharzsystem enthält zur Verbesserung hinsichtlich der Standfestigkeit und/oder der Auspressbarkeit in mindestens einer seiner Komponenten ein oder mehrere fein verteilte Gase.

Die europäische Patentanmeldung EP 1 857 188 A1 beschreibt die Verwendung eines Ultraschallzerstäubers zum Auftragen einer hydrolysierbaren Flüssigkeit auf mindestens eine Substratoberfläche zur Verbesserung der Verklebung von Substraten. Die hydrolysierbare Flüssigkeit kann dabei eine Haftvermittlerzusammensetzung sein, die mindestens eine Haftvermittlersubstanz enthält ausgewählt aus der Gruppe bestehend aus OrganoSiliciumverbindungen, Organo-Titanverbindungen und Organo-Zirkoniumverbindungen. Durch die Anwendung des Ultraschallzerstäubers wird die Haftvermittlerzusammensetzung mit Hilfe eines Trägergases auf die Substratoberfläche aufgetragen, um in dieser Weise eine Vorbehandlung der Substratoberfläche zu erreichen.

Die japanische Patentanmeldung JP S62 288675 A beschriebt eine Kleberzusammensetzung mit einer Harzkomponente (A), die als härtbaren Bestandteil mindestens eine radikalisch härtbare, ethylenisch ungesättigte Verbindung (a) enthält, und einer Härterkomponente (B), die ein Härtungsmittel für das Harz der Harzkomponente (A) enthält, gekennzeichnet durch einen Gehalt an 0,2 bis 10 Gew.-% mindestens eines (Meth)acryloxyalkylsiloxans als weiteren Bestandteil der Harzkomponente (A).

Die internationale Patentanmeldung WO 2008/058588 A2 offenbart eine Patrone, eine Kartusche oder ein Folienbeutel, enthaltend eine chemische Zweikomponenten-Mörtelmasse mit einer Harzkomponente (A), die als härtbaren Bestandteil mindestens eine radikalisch härtbare, ethylenisch ungesättigte Verbindung (a) enthält, und einer Härterkomponente (B), die ein Härtungsmittel für das Harz der Harzkomponente (A) enthält, wobei in der Harzkomponenten (A) und/oder der Härterkomponente (B) mindestens ein anorganischer Füllstoffe enthalten ist, gekennzeichnet dadurch, dass die Patrone, die Kartusche oder der Folienbeutel zwei oder mehr voneinander getrennte Kammern umfasst, in welchen die Harzkomponente (A) bzw. die Härterkomponente (B) reaktionsinhibierend voneinander getrennt angeordnet sind.

Gegenstand der deutschen Patentanmeldung DE 198 53 489 A1 ist die Verwendung von wässrigen Polymerdispersionen oder in Wasser redispergierbaren Polymerpulvern auf der Basis von Schutzkolloid-stabilisierten Vinylaromat-1,3-Dien-Mischpolymerisaten in Baukleberrezepturen, wobei die Polymerdispersionen und die Polymerpulver durch Emulsionspolymerisation eines Gemisches, enthaltend mindestens einen Vinylaromaten und mindestens ein 1,3-Dien, in Gegenwart von einem oder mehreren Schutzkolloiden hergestellt werden. Dabei ist es möglich, der Monomerphase copolymerisierbare Monomere zuzusetzen. Neben einer Vielzahl von ethylenisch ungesättigten Verbindungen können dabei auch Silicium-funktionelle Comonomere, wie Acryloxypropyltri(alkoxy)- und Methacryloxypropyltri(alkoxy)-silane, Vinyltrialkoxysilane und Vinylmethyldialkoxysilane eingesetzt werden.

Es hat sich nunmehr gezeigt, dass eine weitere, im Stand der Technik nicht angesprochene wesentliche Einflussgröße aufdasTragverhalten derchemischen Mörtelmasse in der Qualität der Bohrlochreinigung undderFeuchtigkeit des mineralischen Untergrunds liegt. So hat sich erwiesen, dass in feuchten Bohrlöchern und in nur schlecht von dem Bohrstaub gereinigten Bohrlöchern eine erhebliche Leistungsabnahme eintritt, die sich in verringerten Lastwerten manifestiert.

Zur Überwindung dieses Nachteils sieht der Stand der Technik einerseits vor, einen erhöhten Aufwand bei der Reinigung der Bohrlöcher vorzunehmen und andererseits darauf zu achten, dass die Bohrlöcher nicht feucht sind, weil andernfalls mit einer Verringerung des Lastwerts zu rechnen ist.

Die Aufgabe der vorliegenden Erfindung besteht nun darin, eine chemischeZweikomponenten-Mörtelmasse mit einer Harzkomponente (A), die als härtbaren Bestandteil mindestens eine radikalisch härtbare, ethylenisch ungesättigte Verbindung (a) enthält, und einer davon reaktionsinhibierend getrennt angeordneten Härterkomponente (B), die ein Härtungsmittel für das Harz der Harzkomponente (A) enthält, anzugeben, mit der eine verbesserte Haftung an der Oberfläche von halbgereinigten und/oder feuchten Bohrlöchern in mineralischem Untergrund, beispielsweise Beton, erreicht wird.

Es hat sich überraschenderweise gezeigt, dass diese Aufgabe dadurch gelöst werden kann, dass man in die Harzkomponente als weiteren Bestandteil mindestens ein Methacryloxyalkyltrialkoxysilan und/oder ein Poly(meth)acry-loxyalkylsilsesquioxan einbringt.

Bei der bestimmungsgemäßen Anwendung einer solchen Zweikomponenten-Mörtelmasse ergeben sich sowohl bei trockenen gereinigten Bohrlöchern als auch bei halbgereinigten und/oder feuchten Bohrlöchern Lastwerte der befestigten Bauteile, die deutlich erhöht sind. Diese Verbesserung der Lastwerte bei halbgereinigten und/oderfeuchten Bohrlöchern ist äußerst überraschend, weil die Härterkomponente üblicherweise Wasser als Phlegmatisierungsmittel für das als Härter eingesetzte Peroxid enthält. Ungeachtet der Anwesenheit des Wassers ergibt sich durch den Einsatz von Methacryloxyalkyltrialkoxysilan und/oder Poly(meth)acryloxyalkylsilsesquioxan eine deutlich geringere Verschlechterung der Lastwerte in halbgereinigten und/oder feuchten Bohrlöchern gegenüber den Lastwerten bei gut gereinigten trockenen Bohrlöchern.

Gegenstand der Erfindung ist daher die Patrone, Kartusche oder der Folienbeutel, enthaltend eine chemische Zweikomponenten-Mörtelmasse gemäß Hauptanspruch. Die Unteransprüche betreffen bevorzugte Ausführungsformen dieser Patrone, Kartusche oder dieses Folienbeutels sowie ihre Verwendung der chemischen Zweikomponenten-Mörtelmasse zur chemischen Befestigung von Ankergewindestangen, Bewährungseisen, Gewindehülsen und Schrauben in Bohrlöchern in mineralischem Untergrund, vorzugsweise Beton.

Die Erfindung betrifft somit eine Patrone, Kartusche oder einen Folienbeutel, enthaltend eine chemische Zweikomponenten-Mörtelmasse mit einer Harzkomponente (A), die als härtbaren Bestandteil mindestens eine radikalisch härtbare, ethylenisch ungesättigte Verbindung (a) enthält, und einer Härterkomponente (B), die ein Härtungsmittel für das Harz der Harzkomponente (A) enthält, wobei in der Harzkomponente (A) und/oder der Härterkomponente (B) mindestens ein anorganischer Füllstoff enthalten ist, , die gekennzeichnet ist durch einen Gehalt an 0,2 bis 10 Gew.-%, vorzugsweise 2 bis 5 Gew.-%, noch bevorzugter 3 bis 4 Gew.-%, mindestens eines (Meth)acryloxyalkylsiloxans und/oder Poly((meth) acryloxyalkylsilsesquioxans) als weiteren Bestandteil (b) der Harzkomponente (A), dadurch gekennzeichnet, dass die Patrone, die Kartusche oder der Folienbeutel zwei oder mehrere voneinander getrennte Kammern umfasst, in welchen die Harzkomponente (A) bzw. die Härterkomponente (B) reaktionsinhibierend voneinander getrennt angeordnet sind und dass die Harzkomponente (A) neben dem Harz zusätzlich noch eine hydraulisch abbindende oder polykondensierbare anorganische Verbindung und die Härterkomponente neben dem Härtungsmittel zusätzlich noch Wasser enthält.

Vorzugsweise enthält die Harzkomponente (A) als weiteren Bestandteil (b) mindestens ein (Meth)acryloxyalkylsiloxan der allgemeinen Formel I: 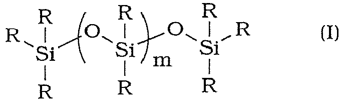 in der R gleichartige oder verschiedene Alkylgruppen mit 1 oder 2 C-Atomen, Trimethylsiloxygruppen oder (Meth)acryloxyalkylgruppen der Formel (II): 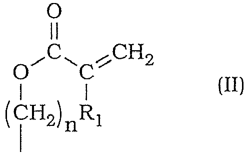 R₁ ein Wasserstoffatom oder eine Methylgruppe, n eine ganze Zahl mit einem Wert von 1 bis 3 und m eine ganze Zahl mit einem Wert von 1 bis 400 mit der Maßgabe bedeuten, dass mindestens eine der Gruppen R eine Methacryloxyalkylgruppe der Formel (II) bedeutet.

Besonders bevorzugt sind als Bestandteil (b) die Vertreter der 3-Methacryloxypropylpentamethyl-disiloxan, 1,3-Bis(3-methacryloxypropyl)-tetrakis-(trimethylsiloxy)-disiloxan, 1,3-Bis(3-methacryloxypropyl)-tetramethyl-disiloxan, Poly(acryloxypropylmethyl)-siloxan (vorzugsweise mit einer Molmasse im Bereich von 3.000 bis 6.000 und einer Viskosität von 50 bis 125 cSt), Monomethacryloxypropyl-terminiertes Polydimethylsiloxan (mit einer Molmasse im Bereich von 600 bis 12.000 und einer Viskosität im Bereich von 6 bis 250 cSt, vorzugsweise mit einer Molmasse von 800 bis 1.200 und einer Viskosität von 10 cSt), Acryloxypropyl-Seitengruppen tragendes Dimethylsiloxan-Copolymer, Methacryloxypropylheptaisobutyl-T8-silsesquioxan, 15 bis 20 % (Acryloxypropyl)-methylsiloxan/80 bis 85 % Dimethylsiloxan-Copolymere, Methacryloxypropyl-Seitengruppen tragendes Dimethylsiloxan-Copolymer (vorzugsweise mit einer Molmasse im Bereich von 500 bis 700) und Methacryloxypropyl-terminiertes Polydimethylsiloxan (mit einer Molmasse im Bereich von 550 bis 30.000 und einer Viskosität von 3 bis 1.150 cSt) umfassenden Gruppe.

Gemäß einer bevorzugten Ausführungsform enthält die Harzkomponente (A) als radikalisch härtbare, ethylenisch ungesättigte Verbindung (a) mindestens einen Vertreter der Hydroxybutylvinylether, Diethylenglykoldivinylether, Triethylenglykoldivinylether, 3-Aminopropylvinylether, t-Amylvinylether, Butylvinylether, Cyclohexandimethanolmonovi-nylether, Cyclohexylvinylether, 3-Diethylaminopropylvinylether, Diethylenglykolmonovinylether, Dodecylvinylether, Ethylenglykolbutylvinylether, Ethylenglykolmonovinylether, 2-Ethylhexylvinylether, Ethylvinylether, Hexandiolmonovi-nylether, Hydroxybutylvinylether, Methylvinylether, Octadecylvinylether, Polyethylenglykol-520-methylvinylether, Triethy-lenglykolmethylvinylether, Butandioldivinylether, Cyclohexandimethanoldivinylether, Diethylenglykoldivinylether, Dipropylenglykoldivinylether, Ethylenglykoldivinylether, Hexandioldivinylether, Neopentylglykoldivinylether, Tetraethylengly- koldivinylether, Triethylenglykoldivinylether, Trimethylolpropantrivinylether, Tripropylenglykoldivinylether, Pentaerythrit- tetravinylether, Allylether, Di(propylenglykol)allylether(meth)acrylat (Isomerenmischung), Diethylenglykolmonoallylether, Pentaerythritallylether, Trimethylolpropanallylether, Trimethylolpropandiallylether, Allylbenzylether, Bisphenol-A-diallylether, Allylbutylether, Allylethylether, Allylglycidylether, Allylphenylether, Allylpropylether, Poly(epichlorhydrin-co-ethylenoxid-co-allylglycidylether), Ethylenglykolmonoallylether, Tetraethylenglykoldiallylether, ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere und Mischungen dieser härtbaren Bestandteile umfassenden Gruppe. Besonders bevorzugt sind als radikalisch härtbare, ethylenisch ungesättigte Verbindungen (a) die difunktionellen Urethan(meth)acrylat-Oligomeren mit 2 bis 30, vorzugsweise 5 bis 15 Urethan(meth)acrylat-Einheiten.

Gemäß einer bevorzugten Ausführungsform der Erfindung enthält die Harzkomponente (A) als weiteren Bestandteil (c) mindestens einen Reaktivverdünner ausgewählt aus der Hydroxypropyl(meth)acrylat, Butandiol-1,2-di(meth)acrylat, Trimethylolpropantri(meth)acrylat, 2-Ethylhexyl(meth)acrylat, Phenylethyl(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, 1,4-Butandioldi-(meth)acrylat, Acetoacetoxyethyl(meth)acrylat, 1,2-Ethandioldi(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2- Hydroxyethyl(meth)acrylat, Dicyclopentenyloxyethyl(meth)acrylat, Tricyclopentadienyldi(meth)acrylat, Bisphenol- A-(meth)acrylat, Novolakepoxydi(meth)acrylat, Di[(meth)acryloyl-maleoyl]-tricyclo-5.2.1.0.^{2.6}-decan, Dicyclopentenyloxyethylcrotonat, 3-(Meth)acryloyloxymethyl-tricylo-5.2.1.0.^{2.6}-decan, 3-(Methyl)cyclopentadienyl(meth)acrylat, Isobornyl(meth)acrylat und/oder Dodecyl-2-(meth)acrylat umfassenden Gruppe.

Der Reaktionsverdünner (c) dient als Comonomer und führt zu einer weiteren Verbesserung der Haftung der ausgehärteten Mörtelmasse an den Oberflächen des mineralischen Untergrunds bzw. des zu befestigenden Bauteils.

Die hierin verwendete Nomenklatur "(Meth)acryl..." und "...(meth)acryl..." bedeutet, dass mit dieser Bezeichnung sowohl die "Methacryl...", "Acryl...", "...methacryl..." als auch die "...acryl..."-Verbindungen umfasst sein sollen.

Gemäß einer weiteren bevorzugten Ausführungsform der Erfindung enthält die Harzkomponente (A) einen Beschleuniger (d) für das Härtungsmittel, vorzugsweise ein aromatisches Amin und/oder ein Salz von Cobalt, Mangan, Zinn, Vanadium oder Cer. Besonders bevorzugt sind als Beschleuniger (d) N,N-Dimethylanilin, N,N-Diethylanilin, N,N-Diisopropanol-p-toluidin, N,N-Diisopropyliden-p-toluidin, N,N-Dimethyl-p-toluidin, N,N-Diethylol-p-toluidin, N,N-Diisopropylol-m-toluidin, N,N-Bis(2-hydroxyethyl)-toluidin, N,N-Bis(2-hydroxyethyl)-xylidin, N-Methyl-N-hydroxyethyl-p-toluidin, Cobaltoctoat, Cobaltnaphthenat, Vanadium(IV)-acetylacetonat und/oderVanadium(V)-acetylacetonat.

Weiterhin kann die Harzkomponente (A) einen üblichen Polymerisationsinhibitor enthalten, wie Methylhydrochinon, Hydrochinon, Brenzcatechin, Hydrochinonmonomethylether, Mono-t-butylhydrochinon, 2,5-Di-t-butylhydrochinon, p-Benzochinon, 2,5-Diphenyl-p-benzochinon, Pikrinsäure, Phenothiazin, t-Butylbrenzcatechin, 2-Butyl-4-hydroxyanisol und 2,6-Di-t-butyl-p-kresol.

Schließlich enthält die erfindungsgemäße chemische Zweikomponenten-Mörtelmasse, wie bei solchen Produkten üblich, in der Harzkomponente (A) und/oder der Härterkomponente (B) mindestens einen anorganischen Füllstoff, wie Quarz, Glas, Korund, Porzellan, Steingut, Schwerspat, Leichtspat, Gips, Talkum und/oder Kreide in Form von Sanden, Mehlen oder Formkörpern, vorzugsweise in Form von Fasern oder Kugeln.

Das in der Härterkomponente (B) der erfindungsgemäßen chemischen Zweikomponenten-Mörtelmasse enthaltene Härtungsmittel für das Harz der Harzkomponente umfasst vorzugsweise mindestens ein organisches Peroxid, bevorzugter Dibenzoylperoxid, Methylethylketonperoxid, tert.-Butylperbenzoat, Cyclohexanonperoxid, Laurylperoxid, Cumolhydroperoxid und/oder tert.-Butylperoxy-2-ethylhexanoat. Diese Peroxide sind vorzugsweise phlegmatisiert, namentlich durch den Zusatz von Wasser als Phlegmatisierungsmittel, wobei Produkte dieser Art dem Fachmann bekannt und auf dem Markt erhältlich sind.

Gemäß der Erfindung enthält die Harzkomponente (A) neben dem Harz zusätzlich noch eine hydraulisch abbindende oder polykondensierbare anorganische Verbindung, wie Zement, vorzugsweise Eisenoxid-freien oder Eisenoxid-armen Zement, wie Aluminatzement, und/oder Gips, wobei in diesem Fall die Härterkomponente (B) neben dem Härtungsmittel und dem für die Phlegmatisierung erforderlichen Wasser noch zusätzliches Wasser für das Aushärten der hydraulisch abbindenden oder polykondensierbaren anorganischen Verbindung.

Erfindungsgemäß liegt die Zweikomponenten-Mörtelmasse in Patronen, Kartuschen oder Folienbeuteln vor, die dadurch gekennzeichnet sind, dass sie zwei oder mehrere voneinander getrennte Kammern umfassen, in welchen die Harzkomponente (A) bzw. die Härterkomponente (B) der oben definierten Art zusammen mit den gegebenenfalls vorhandenen zusätzlichen Bestandteilen reaktionsinhibierend voneinander getrennt angeordnet sind.

Es hat sich überraschenderweise gezeigt, dass bei der bestimmungsgemäßen Verwendung der beschriebenen chemischen Zweikomponenten-Mörtelmasse sich eine generelle Erhöhung der Systemleistungen erzielen lässt, insbesondere eine Verbesserung der System-Robustheit, also der Beibehaltung der erzielten hohen Lastwerte auch bei feuchten Bohrlöchern und/oder bei schlechter Reinigung der in den mineralischen Untergrund eingebrachten Bohrlöcher. Diese Erhöhung der Lastwerte bei nur mäßig gereinigten Bohrlöchern und/oder feuchten Bohrlochoberflächen war nicht zu erwarten und ist besonders überraschend angesichts der Tatsache, dass das in der Härterkomponente der erfindungsgemäßen Mörtelmasse vorhandene Härtungsmittel, nämlich die oben angesprochenen Peroxide, vorzugsweise mit Wasser phlegmatisiert ist, sodass nicht zu erwarten war, dass bei weiterer Zufuhr von Wasser sich eine Verbesserung der Haftung an den Bohrlochoberfläche erzielen lässt.

Gegenstand der Erfindung ist daher auch die Verwendung der beschriebenen chemischen Zweikomponenten-Mörtelmasse zur chemischen Befestigung von Bauteilen, insbesondere Ankergewindestangen, Bewehrungseisen, Gewindehülsen und Schrauben in Bohrlöchern in mineralischem Untergrund, vorzugsweise Beton.

Die folgenden Beispiele dienen der weiteren Erläuterung der Erfindung, ohne sie jedoch in irgendeiner Weise einzuschränken.

### Beispiel 1

### Zweikomponenten-Mörtelmasse auf der Grundlage eines Urethanmethacrylat-Oligomeren

Man bereitet zunächst die Harzkomponente (A) der Zweikomponenten-Mörtelmasse dadurch, dass man 39,3 g des in der nachfolgenden Tabelle 1 angegebenen Harzes (also des Vergleichsharzes UMA-REF und des erfindungsgemäßen Harzes UMA-4) mit 37,2 g eines Quarzsandes (beispielsweise S32), 20,5 g eines Aluminatzements und 3 g einer hydrophoben pyrogenen Kieselsäure im Dissolver unter Vakuum zu einer luftblasenfreien pastösen Masse homogenisiert.

Das Vergleichsharz UMA-REF enthält kein Siloxan, während das Harz UMA-4 jeweils 4,0 Gew.-% des erfindungsgemäßen Bestandteils (b) enthält, nämlich jeweils eines der folgenden Methacryloxyalkylsiloxane:
Siloxan_1 : 3-Methacryloxypropylpentamethyldisiloxan
Siloxan_2: 1,3-Bis(3-methacryloxypropyl)-tetrakis(trimethylsiloxy)-disiloxan
Siloxan_3 : Poly(acryloxypropylmethyl)siloxan (Molmasse 3.000 bis 6.000; Viskosität 50 bis 125 cSt)
Siioxan_4: Monomethacryloxypropyl-terminiertes Polydimethylsiloxan (Molmasse 800 bis 1.200; Viskosität 10 cSt)
Siloxan_5: 1, 3-Bis(3-methacryloxypropyl)tetramethyldisiloxan

Die in dieser Weise erhaltenen Harzkomponenten (A) werden jeweils in eine Kartusche eingebracht.

Als Härterkomponente (B) der Zweikomponenten-Mörtelmasse verwendet man eine wässrige Benzoylperoxidsuspension, die 64 Gew.-% Füllstoff in Form einer Mischung aus Quarzmehl und pyrogener Kieselsäure, 12,4 Gew.-% Benzoylperoxid und Wasser als Rest enthält und die in eine zweite Kartusche eingefülltwird.

| Tabelle **1** | | |
|---|---|---|
| Harz | Vergleich UMA-REF [Gew.-%] | **Erfindung UMA-4** [Gew.-%] |
| Urethanmethacrylat-Oligomer, difunktionell (a) | 32,61 | 32,61 |
| Butandiol-1,4-dimethacrylat (c) | 32,62 | 32,62 |
| Hydroxypropylmethacrylat (c) | 32,62 | 28,62 |
| p-Toluidin (Beschleuniger) (d) | 1,70 | 1,70 |
| Inhibitor (Tempol*) | 0,45 | 0,45 |
| | | |
| Methacryloxyalkylsiloxan (b) | 0 | 4,00 |
| | 100 | 100 |
| *) Tempol = 4-Hydroxy-2,2,6,6-tetramethyl-piperidinooxyl | | |

Bei der bestimmungsgemäßen Anwendung werden die Harzkomponente (A) und die Härterkomponente (B) aus den Kartuschen ausgepresst und durch einen Statikmischer geführt, wodurch die Reaktion dieser Komponenten unter Aushärtung des Reaktionsharzes und des Zements einsetzt. Die reagierende Masse wird in das Bohrloch eingespritzt, worauf das zu befestigende Bauteil eingeführt und justiert wird.

### Beispiel 2

Zur Bestimmung der mit diesen Zweikomponenten-Mörtelmassen erzielten Lastwerte verwendet man eine hochfeste Ankergewindestange M12, die in ein Bohrloch mit einem Durchmesser von 14 mm und einer Bohrlochtiefe von 72 mm mit der erfindungsgemäßen Zweikomponenten-Mörtelmasse eingedübelt wird. Man ermittelt nach einer Aushärtezeit von 1 Stunde bei Raumtemperatur die mittlere Versagenslast durch zentrisches Ausziehen der Ankergewindestange mit enger Abstützung und bestimmt die mittlere Versagenslast von fünf Ankern.

Die untersuchten Bohrlöcher wurden wie folgt präpariert:
**1. Trockener Beton (Vergleich):** trockenes, gereinigtes Bohrloch (Staubsaugen - dreimal Bürsten - Staubsaugen), Setzen und Aushärten der Ankergewindestange bei Raumtemperatur;
**2. Feuchter Beton (Erfindung):** halbgereinigtes und feuchtes Bohrloch (Putzi* - einmal Bürsten - Putzi*), Setzen der Ankergewindestangen und Aushärten bei Raumtemperatur.
*) Putzi = ein fahrradpumpenähnliches Gerät, mit dem der Bohrstaub ausgeblasen wird

Die unter Verwendung der in dem Beispiel 1 beschriebenen Mörtelrezepturen erhaltenen Verbundspannungen für trockene Bohrlöcher (vollständige Reinigung) und feuchte Bohrlöcher mit reduzierter Reinigung sind in der nachfolgenden Tabelle 2 zusammengestellt:

| **Tabelle 2** | | | |
|---|---|---|---|
| | **Verbundspannung [N/mm²]** | | **Differenz [%]** |
| | **trockener Beton** | **feuchter Beton** | |
| Harz ohne Siloxan (Vergleich) | 28.0 ± 1,3 | 18,3 ± 0,7 | -34,5 |
| Harz + 4 % Siloxan_1 | 24,9 ± 1,4 | 22,5 ± 0,7 | -9,7 |
| Harz + 4 % Siloxan 2 | 26,7 ± 0,2 | 23,1 ± 1,0 | -13,5 |
| Harz + 4 % Siloxan_3 | 26,7 ± 0,4 | 23,7 ± 0,9 | -11,2 |
| Harz + 4 % Slloxan_4 | 24,8 ± 1,1 | 24,0 ± 2,2 | -3,1 |
| Harz + 4 % Siloxan_5 | 25,5 ± 1,6 | 25,0 ± 1,8 | -1,7 |

Wie aus der obigen Tabelle 2 zu erkennen ist, ergibt die erfindungsgemäße Zweikomponenten-Mörtelmasse nicht nur eine verbesserte Haftung der Ankerstangen an trockenem und gut gereinigtem Beton, sondern auch eine deutlich schwächere Verringerung der Lastwerte bei der Anwendung in nurwenig gereinigten und feuchten Bohrlöchern.

## Patentansprüche

1. Patrone, Kartusche oder Folienbeutel, enthaltend eine chemische Zweikomponenten-Mörtelmasse mit einer Harzkomponente (A), die als härtbaren Bestandteil mindestens eine radikalisch härtbare, ethylenisch ungesättigte Verbindung (a) enthält, und einer Härterkomponente (B), die ein Härtungsmittel für das Harz der Harzkomponente (A) enthält, wobei in der Harzkomponente (A) und/oder der Härterkomponente (B) mindestens ein anorganischer Füllstoff enthalten ist, **gekennzeichnet durch** einen Gehalt an 0,2 bis 10 Gew.-% mindestens eines (Meth)acryloxyalkylsiloxans und/oder Poly((meth)acryloxyalkylsilsesquioxans) als weiteren Bestandteil (b) der Harzkomponente (A), **dadurch gekennzeichnet, dass** die Patrone, die Kartusche oder der Folienbeutel zwei oder mehrere voneinander getrennte Kammern umfasst, in welchen die Harzkomponente (A) bzw. die Härterkomponente (B) reaktionsinhibierend voneinander getrennt angeordnet sind und dass die Harzkomponente (A) neben dem Harz zusätzlich noch eine hydraulisch abbindende oder polykondensierbare anorganische Verbindung und die Härterkomponente (B) neben dem Härtungsmittel zusätzlich noch Wasser enthält.

2. Patrone, Kartusche oder Folienbeutel nach Anspruch 1, **dadurch gekennzeichnet, dass** die Harzkomponente (A) als weiteren Bestandteil (b) ein (Meth)acryloxyalkylsiloxan der allgemeinen Formel I: 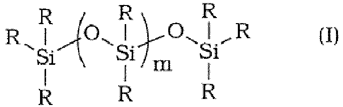 in der R gleichartige oder verschiedene Alkylgruppen mit 1 oder 2 C-Atomen, Trimethylsiloxygruppen oder (Meth)acryloxyalkylgruppen der Formel (II): 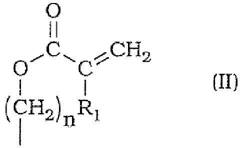 R₁ ein Wasserstoffatom oder eine Methylgruppe, n eine ganze Zahl mit einem Wert von 1 bis 3 und m eine ganze Zahl mit einem Wert von 1 bis 400 mit der Maßgabe bedeuten, dass mindestens eine der Gruppen R eine Methacryloxyalkylgruppe der Formel (II) bedeutet, enthält.

3. Patrone, Kartusche oder Folienbeutel nach Anspruch 1 oder 2, **dadurch gekennzeichnet, dass** die Harzkomponente (A) als weiteren Bestandteil (b) mindestens einen Vertreter der 3-Methacryloxypropylpentamethyl-disiloxan, 1,3-Bis(3-methacryloxypropyl)-tetrakis(trimethylsiloxy)-disiloxan, 1,3-Bis(3-methacryloxypropyl)-tetramethyl-disiloxan, Poly(acryloxypropylmethyl)-siloxan, Monomethacryloxypropyl-terminiertes Polydimethylsiloxan, Acryloxypropyl-Seitengruppen tragendes Dimethylsiloxan-Copolymer, Methacryloxypropylheptaisobutyl-T8-silsesquioxan, 15 bis 20% (Acryloxypropyl)-methylsiloxan/80 bis 85% Dimethylsiloxan-Copolymer, Methacryloxypropyl-Seitengruppen tragendes Dimethylsiloxan-Copolymer und Methacryloxypropyl-terminiertes Polydimethylsiloxan umfassenden Gruppe.

4. Patrone, Kartusche oder Folienbeutel nach mindestens einem der Ansprüche 1 bis 3, **dadurch gekennzeichnet, dass** die Harzkomponente (A) als radikalisch härtbare, ethylenisch ungesättigte Verbindung (a) mindestens einen Vertreter der Hydroxybutylvinylether, Diethylenglykoldivinylether, Triethylenglykoldivinylether, 3-Aminopropylvinylether, t-Amylvinylether, Butylvinylether, Cyclohexandimethanolmonovinylether, Cyclohexylvinylether, 3-Diethylaminopropylvinylether, Diethylenglykolmonovinylether, Dodecylvinylether, Ethylenglykolbutylvinylether, Ethylenglykolmonovinylether, 2- Ethylhexylvinylether, Ethylvinylether, Hexandiolmonovinylether, Hydroxybutylvinylether, Methylvinylether, Octadecylvinylether, Polyethylenglykol-520- methylvinylether, Triethylenglykolmethylvinylether, Butandioldivinylether, Cyclohexandimethanoldivinylether, Diethylenglykoldivinylether, Dipropylenglykoldivinylether, Ethylenglykoldivinylether, Hexandioldivinylether, Neopentylglykoldivinylether, Tetraethylenglykoldivinylether, Triethylenglykoldivinylether, Trimethylolpropantrivinylether, Tripropylenglykoldivinylether, Pentaerythrittetravinylether, Allylether, Di(propylenglykol)allylether(meth)acrylat (Isomerenmischung), Diethylenglykolmonoallylether, Pentaerythritallylether, Trimethylolpropanallylether, Trimethylolpropandiallylether, Allylbenzylether, Bisphenol-A-diallylether, Allylbutylether, Allylethylether, Allylglycidylether, Allylphenylether, Allylpropylether, Poly(epichlorhydrin-co-ethylenoxid-co-allylglycidylether), Ethylenglykolmonoallylether, Tetraethylenglykoldiallylether, ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere und Mischungen dieser härtbaren Bestandteile umfassenden Gruppe enthält.

5. Patrone, Kartusche oder Folienbeutel nach Anspruch 4, **dadurch gekennzeichnet, dass** die Harzkomponente (A) als radikalisch härtbare, ethylenisch ungesättigte Verbindung (a) ein difunktionelles Urethan(meth)acrylat-Oligomer mit 2 bis 30 Urethan(meth)acrylat-Einheiten enthält.

6. Patrone, Kartusche oder Folienbeutel nach mindestens einem der Ansprüche 1 bis 5, **dadurch gekennzeichnet, dass** die Harzkomponente (A) als weiteren Bestandteil (c) mindestens einen Reaktivverdünner ausgewählt aus der Hydroxypropyl(meth)acrylat, Butandiol-1,2-di(meth)acrylat, Trimethylolpropantri(meth)acrylat, 2-Ethylhexyl(meth)acrylat, Phenylethyl(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, 1,4-Butandioldi(meth)acrylat, Acetoacetoxyethyl(meth)acrylat, 1,2-Ethandioldi(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1,0.^{2.6}-decan, Dicyclopentenyloxyethylcrotonat, 3-(Meth)acryloyloxymethyltricyclo-5.2.1.0.^{2.6}-decan, 3-(Methyl)-cyclopentadienyl(meth)acrylat und/oder Dodecyl-2-(meth)acrylat umfassenden Gruppe enthält.

7. Patrone, Kartusche oder Folienbeutel nach mindestens einem der Ansprüche 1 bis 6, **dadurch gekennzeichnet, dass** die Harzkomponente (A) einen Beschleuniger (d) für das Härtungsmittel enthält.

8. Patrone, Kartusche oder Folienbeutel nach Anspruch 7, **dadurch gekennzeichnet, dass** die Harzkomponente (A) als Beschleuniger (d) ein aromatisches Amin und/oder ein Salz von Cobalt, Mangan, Zinn, Vanadium oder Cer enthält.

9. Patrone, Kartusche oder Folienbeutel nach Anspruch 8, **dadurch gekennzeichnet, dass** die Harzkomponente (A) als Beschleuniger (d) N,N-Dimethylanilin, N,N-Diethylanilin, N,N-Diisopropanol-p-toluidin, N,N-Diisopropyliden-p-toluidin, N,N-Dimethyl-p-toluidin, N,N-Diethylol-p-toluidin, N,N-Diisopropylol-m-toluidin, N,N-Bis(2-hydroxyethyl)-toluidin, N,N-Bis(2-hydroxyethyl)-xylidin, N-Methyl-N-hydroxyethyl-p-toluidin, Cobaltoctoat, Cobaltnaphthenat, Vanadium(IV)-acetylacetonat und/oder Vanadium(V)-acetylacetonat enthält.

10. Patrone, Kartusche oder Folienbeutel nach mindestens einem der Ansprüche 1 bis 9, **dadurch gekennzeichnet, dass** als anorganischer Füllstoff Quarz, Glas, Korund, Porzellan, Steingut, Schwerspat, Leichtspat, Gips, Talkum und/oder Kreide in Form von Sanden, Mehlen oder Formkörpern, vorzugsweise in Form von Fasern oder Kugeln enthalten ist.

11. Patrone, Kartusche oder Folienbeutel nach mindestens einem der Ansprüche 1 bis 10, **dadurch gekennzeichnet, dass** die Härterkomponente (B), als Härtungsmittel für das Harz der Harzkomponente (A) mindestens ein organisches Peroxid, vorzugsweise Dibenzoylperoxid, Methylethylketonperoxid, tert.-Butylperbenzoat, Cyclohexanonperoxid, Laurylperoxid, Cumolhydroperoxid und/oder tert.-Butylperoxy-2-ethylhexanoat enthält.

12. Verwendung einer chemischen Zweikomponenten-Mörtelmasse mit einer Harzkomponente (A), die als härtbaren Bestandteil mindestens eine radikalisch härtbare, ethylenisch ungesättigte Verbindung (a) enthält, und einer Härterkomponente (B), die ein Härtungsmittel für das Harz der Harzkomponente (A) enthält, wobei in der Harzkomponente (A) und/oder der Härterkomponente (B) mindestens ein anorganischer Füllstoff enthalten ist, **gekennzeichnet durch** einen Gehalt an 0,2 bis 10 Gew.-% mindestens eines (Meth)acryloxyalkylsiloxans und/oder Poly((meth)acryloxyalkylsilsesquioxans) als weiteren Bestandteil (b) der Harzkomponente (A) sowie **dadurch, dass** die Harzkomponente (A) neben dem Harz zusätzlich noch eine hydraulisch abbindende oder polykondensierbare anorganische Verbindung enthält und die Härterkomponente (B) neben dem Härtungsmittel zusätzlich noch Wasser enthält zur chemischen Befestigung von Ankergewindestangen, Bewehrungseisen, Gewindehülsen und Schrauben in Bohrlöchern in mineralischem Untergrund.

## Claims

1. Capsule, cartridge or film pouch containing a chemical two-component mortar composition comprising a resin component (A), which contains at least one radically curable, ethylenically unsaturated compound (a) as a curable component, and a hardener component (B), which contains a hardener for the resin of the resin component (A), at least one inorganic filler being contained in the resin component (A) and/or in the hardener component (B), **characterized by** a content of 0.2 to 10 wt.% of at least one (meth)acryloxyalkylsiloxane and/or poly((meth)acryloxyalkylsilsesquioxane) as a further constituent (b) of the resin component (A), **characterized in that** the capsule, cartridge or the film pouch comprises two or more separate chambers in which the resin component (A) and the hardener component (B) are arranged separately in a reaction-inhibiting manner and **in that** the resin component (A) also contains a hydraulically setting or polycondensable inorganic compound in addition to the resin and the hardener component (B) also contains water in addition to the hardener.

2. Capsule, cartridge or film pouch according to claim 1, **characterized in that** the resin component (A) contains, as a further constituent (b), a (meth)acryloxyalkylsiloxane of general formula I: 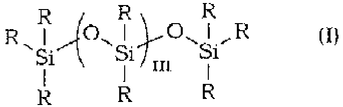 in which R denotes identical or different alkyl groups having 1 or 2 carbon atoms, trimethyl siloxy groups or (meth)acryloxy alkyl groups of formula (II): 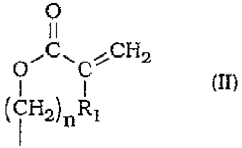 in which R₁ denotes a hydrogen atom or a methyl group, n denotes a whole number with a value from 1 to 3 and m denotes a whole number with a value from 1 to 400, with the proviso that at least one of the groups R denotes a methacryloxy alkyl group of formula (II).

3. Capsule, cartridge or film pouch according to either claim 1 or claim 2, **characterized in that** the resin component (A) contains, as a further constituent (b), at least one representative of the group comprising 3-methacryloxypropylpentamethyl-disiloxane, 1,3-bis(3-methacryloxypropyl)-tetrakis(trimethylsiloxy)-disiloxane, 1,3-bis(3-methacryloxypropyl)-tetramethyl-disiloxane, poly(acryloxypropyl methyl)-siloxane, monomethacryloxypropyl-terminated polydimethylsiloxane, dimethylsiloxane copolymer bearing acryloxypropyl side groups, methacryloxypropylheptaisobutyl-T8-silsequioxane, 15 to 20% (acryloxypropyl)methylsiloxane/80 to 85% dimethylsiloxane copolymer, dimethylsiloxane copolymer bearing methacryloxypropyl side groups, and methacryloxypropyl-terminated polydimethylsiloxane.

4. Capsule, cartridge or film pouch according to at least one of claims 1 to 3, **characterized in that** the resin component (A) contains, as a radically curable, ethylenically unsaturated compound (a), at least one representative of the group comprising hydroxybutyl vinyl ether, diethylene glycol divinyl ether, triethylene glycol divinyl ether, 3-aminopropyl vinyl ether, t-amyl vinyl ether, butyl vinyl ether, cyclohexanedimethanol monovinyl ether, cyclohexyl vinyl ether, 3-diethylaminopropylvinylether, diethylene glycol monovinyl ether, dodecyl vinyl ether, ethylene glycol butyl vinyl ether, ethylene glycol monovinyl ether, 2-ethylhexyl vinyl ether, ethyl vinyl ether, hexanediol monovinyl ether, hydroxybutyl vinyl ether, methyl vinyl ether, octadecyl vinyl ether, polyethylene glycol-520-methyl vinyl ether, triethylene glycol methyl vinyl ether, butanediol divinyl ether, cyclohexanedimethanol divinyl ether, diethylene glycol divinyl ether, dipropylene glycol divinyl ether, ethylene glycol divinyl ether, hexanediol divinyl ether, neopentyl glycol divinyl ether, tetraethylene glycol divinyl ether, triethylene glycol divinyl ether, trimethylolpropane trivinyl ether, tripropylene glycol divinyl ether, pentaerythritol tetravinyl ether, allyl ether, di(propylene glycol) allyl ether (meth) acrylate (isomer mixture), diethylene glycol monoallyl ether, pentaerythritol allyl ether, trimethylolpropane allyl ether, trimethylolpropane diallyl ether, allyl benzyl ether, bisphenol A diallyl ether, allyl butyl ether, allyl ethyl ether, allyl glycidyl ether, allyl phenyl ether, allyl propyl ether, poly(epichlorohydrin-co-ethylene oxide-co-allyl glycidyl ether), ethylene glycol monoallyl ether, tetraethylene glycol diallyl ether, ethoxylated bisphenol A di(meth)acrylate with a degree of ethoxylation of 2 to 10, preferably 2 to 4, difunctional, trifunctional or higher-functional urethane (meth)acrylate oligomers and mixtures of these curable constituents.

5. Capsule, cartridge or film pouch according to claim 4, **characterized in that** the resin component (A) contains, as the radically curable, ethylenically unsaturated compound (a), a difunctional urethane (meth)acrylate oligomer having 2 to 30 urethane (meth)acrylate units.

6. Capsule, cartridge or film pouch according to at least one of claims 1 to 5, **characterized in that** the resin component (A) contains, as a further constituent (c), at least one reactive diluent selected from the group comprising hydroxypropyl (meth)acrylate, butanediol-1,2-di(meth)acrylate, trimethylolpropane tri(meth)acrylate, 2-ethylhexyl (meth)acrylate, phenylethyl (meth)acrylate, tetrahydrofurfuryl (meth)acrylate, ethyltriglycol (meth)acrylate, N,N-dimethylaminoethyl (meth)acrylate, N,N-dimethylaminomethyl (meth)acrylate, 1,4-butanediol di(meth)acrylate, acetoacetoxyethyl (meth)acrylate, 1,2-ethanediol di(meth)acrylate, isobornyl (meth)acrylate, diethylene glycol di(meth)acrylate, methoxypolyethylene glycol mono(meth)acrylate, trimethylcyclohexyl (meth)acrylate, 2-hydroxyethyl (meth)acrylate, dicyclopentenyloxyethyl (meth)acrylate and/or tricyclopentadienyl di(meth)acrylate, bisphenol A (meth)acrylate, novolac epoxy di(meth)acrylate, di-[(meth)acryloyl maleoyl]-tricyclo-5.2.1.0.^{2.6}-decane, dicyclopentenyloxyethyl crotonate, 3-(meth)acryloyloxymethyltricyclo-5.2.1.0.^{2.6}-decane, 3-(methyl)-cyclopentadienyl (meth)acrylate and/or dodecyl-2-(meth)acrylate.

7. Capsule, cartridge or film pouch according to at least one of claims 1 to 6, **characterized in that** the resin component (A) contains an accelerator (d) for the hardener.

8. Capsule, cartridge or film pouch according to claim 7, **characterized in that** the resin component (A) contains, as an accelerator (d), an aromatic amine and/or a salt of cobalt, manganese, tin, vanadium or cerium.

9. Capsule, cartridge or film pouch according to claim 8, **characterized in that** the resin component (A) contains, as an accelerator (d), N,N-dimethylaniline, N,N-diethylaniline, N,N-diisopropanol-p-toluidine, N,N-diisopropylidene-p-toluidine, N,N-dimethyl-p-toluidine, N, N-diethylol-p-toluidine, N,N-diisopropylene-m-toluidine, N,N-bis(2-hydroxyethyl)-toluidine, N,N-bis(2-hydroxyethyl)-xylidine, N-methyl-N-hydroxyethyl-p-toluidine, cobalt octoate, cobalt naphthenate, vanadium(IV) acetylacetonate and/or vanadium(V) acetylacetonate.

10. Capsule, cartridge or film pouch according to at least one of claims 1 to 9, **characterized in that** quartz, glass, corundum, porcelain, earthenware, barite, light spar, gypsum, talc and/or chalk in the form of sands, powders or molded bodies, preferably in the form of fibers or balls, is contained as the inorganic filler.

11. Capsule, cartridge or film pouch according to at least one of claims 1 to 10, **characterized in that** the hardener component (B) contains, as the hardener for the resin of the resin component (A), at least one organic peroxide, preferably dibenzoyl peroxide, methyl ethyl ketone peroxide, tert-butyl perbenzoate, cyclohexanone peroxide, lauryl peroxide, cumene hydroperoxide and/or tert-butyl peroxy-2-ethylhexanoate.

12. Use of a chemical two-component mortar composition comprising a resin component (A), which contains at least one radically curable, ethylenically unsaturated compound (a) as a curable component, and a hardener component (B), which contains a hardener for the resin of the resin component (A), at least one inorganic filler being contained in the resin component (A) and/or in the hardener component (B), **characterized by** a content of 0.2 to 10 wt.% of at least one (meth)acryloxyalkylsiloxane and/or poly((meth)acryloxyalkylsilsesquioxane) as a further constituent (b) of the resin component (A), and in that the resin component (A) also contains a hydraulically setting or polycondensable inorganic compound in addition to the resin and the hardener component (B) also contains water in addition to the hardener, for the chemical fastening of anchor threaded rods, reinforcing bars, threaded sleeves and screws in boreholes in a mineral substrate.

## Revendications

1. Cartouche, pistolet ou poche en film contenant une masse de mortier chimique à deux composants comportant un composant de résine (A), qui contient au moins un composé à insaturation éthylénique et durcissable par voie radicalaire (a) en tant que constituant durcissable, et un composant durcisseur (B), qui contient un agent de durcissement destiné à la résine du composant de résine (A), au moins une charge inorganique étant contenue dans le composant de résine (A) et/ou le composant durcisseur (B), **caractérisé par** une teneur de 0,2 à 10 % en poids d'au moins un (méth)acryloxyalkylsiloxane et/ou poly((méth)acryloxyalkylsilsesquioxane) en tant que constituant supplémentaire (b) du composant de résine (A), **caractérisé en ce que** la cartouche, le pistolet ou la poche en film comprend deux ou plusieurs chambres séparées les unes des autres, dans lesquelles le composant de résine (A) ou le composant durcisseur (B) sont disposés séparément l'un de l'autre de manière à inhiber une réaction, et **en ce que** le composant de résine (A), en plus de la résine, contient également un composé à prise hydraulique ou polycondensable inorganique et le composant durcisseur (B), en plus de l'agent de durcissement, contient également de l'eau.

2. Cartouche, pistolet ou poche en film selon la revendication 1, **caractérisé en ce que** le composant de résine (A) contient, en tant que constituant supplémentaire (b), un (méth)acryloxyalkylsiloxane de formule générale I : 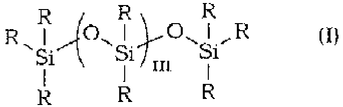 dans laquelle R représente des groupes alkyle identiques ou différents à 1 ou 2 atomes de carbone, des groupes triméthylsiloxy ou des groupes (méth)acryloxyalkyle de formule (II) : 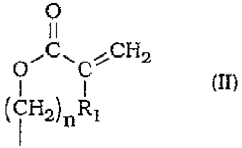 dans laquelle R₁ représente un atome d'hydrogène ou un groupe méthyle, n représente un nombre entier d'une valeur de 1 à 3 et m représente un nombre entier d'une valeur de 1 à 400 à condition qu'au moins l'un des groupes R désigne un groupe méthacryloxyalkyle de formule (II).

3. Cartouche, pistolet ou poche en film selon la revendication 1 ou 2, **caractérisé en ce que** le composant de résine (A) contient, en tant que constituant supplémentaire (b), au moins un représentant du groupe comprenant le 3-méthacryloxypropylpentaméthyl-disiloxane, 1,3-bis (3-méthacryloxypropyl)-tétrakis(triméthylsiloxy)-disiloxane, 1,3-bis (3-méthacryloxypropyl)-tétraméthyl-disiloxane, poly(acryloxypropylméthyl)-siloxane, polydiméthylsiloxane à terminaison monométhacryloxypropyle, copolymère diméthylsiloxiloxane portant des groupes latéraux acryloxypropyle, méthacryloxypropylheptaisobutyl-T8-silsesquioxane, 15 à 20 % de (acryloxypropyl)-methylsiloxane/80 à 85 % de copolymère de diméthylsiloxane, copolymère de diméthylsiloxane portant des groupes latéraux méthacryloxypropyle et polyloxypropyle à terminaison méthacryloxypropyle.

4. Cartouche, pistolet ou poche en film selon au moins l'une des revendications 1 à 3, **caractérisé en ce que** le composant de résine (A) contient, en tant que composé à insaturation éthylénique et durcissable par voie radicalaire (a), au moins un représentant du groupe comprenant l'éther hydroxybutylvinylique, éther divinylique de diéthylène glycol, éther divinylique de triéthylène glycol, éther 3-aminopropylvinylique, éther t-amylvinylique, éther butylvinylique, éther monovinylique de cyclohexanediméthanol, éther cyclohexylvinylique, éther 3-diéthylaminopropylvinylique, éther monovinylique de diéthylène glycol, éther vinylique de dodécyle, éther vinylique d'éthylèneglycolbutyle, éther monovinylique d'éthylène glycol, éther de 2-éthylhexylvinylique, éther vinylique d'éthyle, éther monovinylique d'hexanediol, éther vinylique d'hydroxybutyle, éther méthylvinylique, éther vinylique d'octadécyle, éther méthylvinylique de polyéthylène glycol-520, éther méthylvinylique de triéthylène glycol, éther divinylique de butanediol, éther divinylique de cyclohexanediméthanol, éther divinylique de diéthylène glycol, éther divinylique de dipropylène glycol, éther divinylique d'éthylène glycol, éther divinylique d'hexanediol, éther divinylique de néopentyl glycol, éther divinylique de tétraéthylène glycol, éther divinylique de triéthylène glycol, éther trivinylique de triméthylolpropane, éther divinylique de tripropylenglycol, éther tétravinylique de pentaérythritol, éther allylique, di(propylène glycol)éther allylique(méth)acrylate (mélange d'isomères), éther monoallylique de diéthylène glycol, éther allylique de pentaérythritol, éther allylique de triméthylol propane, éther diallylique de triméthylol propane, éther allylique de benzyle, éther diallylique de bisphénol-A, éther allylbutyle, éther allyléthyle, éther allylglycidyle, éther allylphényle, éther allylpropyle, poly(épichlorhydrine-co-oxyde d'éthylène-co-éther allylglycidyle), éther monoallylique d'éthylène glycol, éther diallylique de tétraéthylèneglycol, di(méth)acrylate de bisphénol-A éthoxylé avec un degré d'éthoxylation de 2 à 10, de préférence de 2 à 4, les oligomères d'uréthane(méth)acrylate bifonctionnels, trifonctionnels ou à fonction supérieure et des mélanges de ces constituants durcissables.

5. Cartouche, pistolet ou poche en film selon la revendication 4, **caractérisé en ce que** le composant de résine (A) contient un oligomère de (méth)acrylate d'uréthane bifonctionnel à 2 à 30 motifs de (méth)acrylate d'uréthane en tant que composé à insaturation éthylénique et durcissable par voie radicalaire (a).

6. Cartouche, pistolet ou poche en film selon au moins l'une des revendications 1 à 5, **caractérisé en ce que** le composant de résine (A) contient, en tant que constituant supplémentaire (c), au moins un diluant réactif choisi dans le groupe comprenant le (méth)acrylate d'hydroxypropyle, le di(méth)acrylate de butanediol-1,2, le tri(méth)acrylate de triméthylolpropane, le (méth)acrylate de 2-éthylhexyle, le (méth)acrylate de phényléthyle, le (méth)acrylate de tétrahydrofurfuryle, le (méth)acrylate d'éthyltriglycol, le (méth)acrylate de N,N-diméthylaminoéthyle, le (méth)acrylate de N,N-diméthylaminométhyle, le di(méth)acrylate de 1,4-butanediol, le (méth)acrylate d'acétoacétoxyéthyle, le di(méth)acrylate de 1,2-éthanediol, le (méth)acrylate d'isobornyle, le di(méth)acrylate de diéthylène glycol, le mono(méth)acrylate de méthoxypolyéthylène glycol, le (méth)acrylate de triméthylcyclohexyle, le (méth)acrylate de 2-hydroxyéthyle, le (méth)acrylate de dicyclopentényloxyéthyle et/ou le di(méth)acrylate de tricyclopentadiényle, le (méth)acrylate de bisphénol-A, le de(méth)acrylate d'époxy novolac, le di-[(méth)acryloyl-maléoyl]tricyclo-5.2.1.0.^{2,6}-décane, le crotonate de dicyclopentényloxyéthyle, le 3-(méth)acryloyloxyméthyltricyclo-5.2.1.0.^{2,6}-décane, le (méth)acrylate de 3-(méthyl)-cyclopentadiényl et/ou le (méth)acrylate de dodécyl-2.

7. Cartouche, pistolet ou poche en film selon au moins l'une des revendications 1 à 6, **caractérisé en ce que** le composant de résine (A) contient un accélérateur (d) destiné à l'agent de durcissement.

8. Cartouche, pistolet ou poche en film selon la revendication 7, **caractérisé en ce que** le composant de résine (A) contient une amine aromatique et/ou un sel de cobalt, manganèse, étain, vanadium ou cérium en tant qu'accélérateur (d).

9. Cartouche, pistolet ou poche en film selon la revendication 8, **caractérisé en ce que** le composant de résine (A) contient, en tant qu'accélérateur (d), de la N,N-diméthylaniline, de la N,N-diéthylaniline, de la N,N-diisopropanol-p-toluidine, de la N,N-diisopropylidène-p-toluidine, de la N,N-diméthyl-p-toluidine, de la N,N-diéthylol-p-toluidine, de la N,N-diisopropylol-m-toluidine, de la N,N-bis(2-hydroxyéthyl)toluidine, de la N,N-bis(2-hydroxyéthyl)xylidine, de la N-méthyl-N-hydroxyéthyl-p-toluidine, de l'octoate de cobalt, du naphténate de cobalt, de l'acétylacétonate de vanadium (IV) et/ou de l'acétylacétonate de vanadium (V).

10. Cartouche, pistolet ou poche en film selon au moins l'une des revendications 1 à 9, **caractérisé en ce que** du quartz, du verre, du corindon, de la porcelaine, de la faïence, de la baryte, du gypse léger, du plâtre, du talc et/ou de la craie sous forme de sable, de farines ou de corps moulés, de préférence sous forme de fibres ou de sphères, sont contenus en tant que charge inorganique.

11. Cartouche, pistolet ou poche en film selon au moins l'une des revendications 1 à 10, **caractérisé en ce que** le composant durcisseur (B) contient, en tant qu'agent de durcissement destiné à la résine du composant de résine (A), au moins un peroxyde organique, de préférence le peroxyde de dibenzoyle, le peroxyde de méthyléthylcétone, le perbenzoate de tert.-butyle, le peroxyde de cyclohexanone, le peroxyde de lauryle, l'hydroperoxyde de cumène et/ou le peroxy-2-éthylhexanoate de tert.-butyle.

12. Utilisation d'une masse de mortier chimique à deux composants comportant un composant de résine (A), qui contient au moins un composé à insaturation éthylénique et durcissable par voie radicalaire (a) en tant que constituant durcissable, et un composant durcisseur (B), qui contient un agent de durcissement destiné à la résine du composant de résine (A), au moins une charge inorganique étant contenue dans le composant de résine (A) et/ou le composant durcisseur (B), **caractérisée par** une teneur de 0,2 à 10 % en poids d'au moins un (méth)acryloxyalkylsiloxane et/ou poly((méth)acryloxyalkylsilsesquioxane) en tant que constituant supplémentaire (b) du composant de résine (A) et en ce que le composant de résine (A), en plus de la résine, contient également un composé inorganique à prise hydraulique ou polycondensable et le composant durcisseur (B), en plus de l'agent de durcissement, contient également de l'eau servant à la fixation chimique de tiges d'ancrage filetées, de fers d'armature, de manchons filetés et de vis dans des trous de forage dans un substratum minéral.
